# EUROPÄISCHE PATENTANMELDUNG

(11) **EP 3 095 327 A1**
(43) Veröffentlichungstag der Anmeldung: **23.11.2016**
(21) Anmeldenummer: 15001491.8
(22) Anmeldetag: 18.05.2015
(51) Int. Cl.: A01N 25/04, A01N 59/06

(54) **MITTEL ZUR BEHANDLUNG VON SCHIMMELPILZEN, BAKTERIEN UND/ODER ALGEN**

(71) Anmelder: Hausana GmbH, 84056 Rottenburg (DE)
(72) Erfinder: Rubini, Franco, 84056 Rottenburg (DE); Rohrmeier, Hubert, 84056 Rottenburg (DE)
(74) Vertreter: Kador & Partner

(57) **Zusammenfassung**

Mittel zur Behandlung von Schimmelpilzen, Bakterien und/oder Algen, enthaltend die Komponenten 5 - 20 Gew.% einer Calciumhydroxid-Suspension, wobei die Calciumhydroxid-Partikel einen mittleren Partikeldurchmesser von 1 - 80 µm aufweisen, 60 - 80 Gew.% eines Lösungsmittels, 15 - 25 Gew.% deionisiertes Wasser, 0,05 - 0,6 Gew.% eines Polyacrylats, 0,05 - 0,6 Gew.% einer Aminverbindung, und 0,05 - 0,6 Gew.% eines Aminethoxylats,

## Beschreibung

Die Erfindung bezieht sich auf Mittel zur Behandlung von Schimmelpilzen, Bakterien und/oder Algen, insbesondere ein Mittel zur Behandlung von Schimmelpilzen, Bakterien und/oder Algen, sowie ein Verfahren zur Herstellung dieses Mittels.

Ein unerwünschter Schimmelpilz- oder Bakterienbefall tritt vorallem an und in Gebäuden, insbesondere in Wohnungen auf. In Wohnungen sind besonders Räume mit hoher Luftfeuchtigkeit betroffen, wie beispielsweise das Bad. Ferner treten Schimmelpilz- oder Bakterienbefall im Zusammenhang mit Feuchteschäden auf. Diese Feuchteschäden können durch direkten Feuchteeintrag entstehen, beispielsweise durch defekte Dächer oder Risse im Mauerwerk.

Schimmelpilz- oder Bakterienbefall in Gebäuden ist nicht nur eine Geruchsbelästigung sondern vor allem eine permanente Gesundheitsgefährdung für die Benutzer der Gebäude bzw. der Wohnungen darstellt, kommt, neben der Beseitigung der Ursachen der Feuchtigkeitsschäden, einer Behandlung und Entfernung der Schimmelpilze und Bakterien eine wesentliche Bedeutung zu.

Die Behandlung gegen Schimmelpilze, Bakterien und/oder Algen betrifft einerseits anorganisches Material, wie beispielsweise die in der Bautechnik üblichen mineralischen Baustoffe und Gesteine, synthetische Baustoffe und mineralische oder synthetische Bindemittel, wie Sandstein, Kalkstein, Beton, Zement, Mörtel, oder Silikon und andererseits auch organisches Material, wie beispielsweise Holz und Zellulose enthaltende Baustoffe und Bindemittel.

Schimmelpilz- oder Bakterienbefall tritt nicht nur auf Putz, Mauerwerk oder porigem Gestein auf, sondern auch in Silikonfugen an Fenstern und Fliesen, auf Möbel oder auf Bestandteilen aus Pappe oder Papier auf.

Aus dem Stand der Technik bekannte Mittel zur Behandlung von Schimmelpilzen, Bakterien und/oder Algen enthalten üblicherweise als Hauptbestandteile einen Alkohol, meist Ethanol, und Calciumhydroxid. Es ist bekannt, dass sich Alkohol und Calciumhydroxid unter normalen Umständen nicht mischen lassen. Es kommt zudem zum Ausfällen ("Carbonatisierung") als Calciumcarbonat durch Reaktion der Ca(OH)₂ Partikel mit atmosphärischem Kohlendioxid.

Darüber hinaus tritt üblicherweise eine relativ rasche Sedimentation von Calciumhydroxid-Partikeln im Mittel bzw. in der Suspension auf, welche unter 1 Stunde betragen kann. Mit Sedimentation ist gemeint, dass sich die Calciumhydroxid Partikel unter Einfluss der Schwerkraft am Behälterboden ablagern und es somit zur Phasentrennung kommt. Dies stellt besonders bei längeren Einsatzzeiten des Mittels ein Problem dar, da die Suspension während des Arbeitens häufig wieder homogenisiert werden muss, beispielsweise durch kräftiges Aufschütteln.

Suspensionen, in welchen Carbonatisierung-Reaktionen und/oder Sedimentation von Calciumhydroxid-Partikeln auftreten, werden dadurch für praktische Anwendungen ungeeignet oder unbrauchbar gemacht.

Aus der DE 10 2006 049 923 A1 ist ein Mittel zur Behandlung von organischem und/oder anorganischem Material gegen Schimmelpilze, Bakterien und/oder Algen bekannt. Das Mittel enthält mindestens eine Dispersion von einer dispersen Phase aus kolloidalem Calciumhydroxid-Partikel in einem organischen Dispersionsmittel. Die Calciumhydroxid-Partikel weisen einen mittleren Partikeldurchmesser von 0,01 bis 10 µm auf. Das organische Dispersionsmittel ist vorzugsweise ein Alkohol, ausgewählt aus Ethanol, 1-Propanol, 2-Propanol (Isopropanol) oder Mischungen davon.

Aus der CN 1425723 ist ein Antifouling-Mittel bekannt, welches Calciumhydroxid, 3-Aminopropyl-triethoxysilan und Ethanol enthält. Das Antifouling-Mittel weist eine Langzeitwirkung auf und ist nicht-toxisch.

Eine antimikrobielle Substanz enthaltend Calciumoxid-Partikel, und optional Calciumhydroxid Partikel, mit einer Partikelgröße kleiner 74 µm ist aus der EP 0 575 623 A1 bekannt.

Darüber hinaus sind im Stand der Technik chlorhaltige Putz- und Reinigungsmittel zur Schimmelbekämpfung bekannt. Nachteilig bei solchen Mitteln ist jedoch, dass manche Materialien kein Chlor vertragen bzw. es zu Beschädigungen und Veränderungen der Oberfläche der behandelnden Stellen kommt. Darüber hinaus wirkt Chlor bzw. Chlorgas reizend und hinterlässt bereits bei der Anwendung einen unangenehmen Geruch. Zudem kann, auch längere Zeit nach der Anwendung, durch Eintrag von Feuchtigkeit aus der Raumluft reizender Chlordampf entstehen.

Der Erfindung liegt die Aufgabe zugrunde, Mittel zur Behandlung von Schimmelpilzen, Bakterien und/oder Algen bereitzustellen, die die oben erwähnten Nachteile verringert oder vermeidet.

Es ist eine Aufgabe der Erfindung, Mittel zur Behandlung von Schimmelpilzen, Bakterien und/oder Algen bereitzustellen, in welchem die rasche Sedimentation von Calciumhydroxid-Partikeln verringert oder vermieden wird.

Es ist eine weitere Aufgabe der Erfindung ein Mittel bereitzustellen, welches eine rasche, sichere, vollständige und dauerhafte Entfernung von Schimmelpilzen, Bakterien und/oder Algen von Oberflächen gewährleistet.

Es ist ferner eine Aufgabe der Erfindung, ein Mittel zur Behandlung von Schimmelpilzen, Bakterien und/oder Algen bereitzustellen, welches eine biozide und zugleich abrasive Wirkung aufweist.

Eine weitere Aufgabe der Erfindung besteht darin, ein Mittel zur Behandlung von Schimmelpilzen, Bakterien und/oder Algen bereitzustellen, welches Schimmel, Sporen, Pilze und Bakterien in tieferen Lagen zu umhüllen, einzuschließen und abzutöten.

Es ist ferner eine Aufgabe der Erfindung, ein Mittel zur Behandlung von Schimmelpilzen, Bakterien und/oder Algen bereitzustellen, welches eine dauerhafte Schutzschicht auf Oberflächen gegen den Befall von Schimmelpilzen, Bakterien und/oder Algen ausbildet.

Der vorliegenden Erfindung liegt die Erkenntnis zu Grunde, dass alle oben erwähnten Aufgaben durch Zugabe eines Polyacrylats, einer Aminverbindung und eines Aminethoxylats zu einer Calciumhydroxid-Suspension gelöst werden können.

Gegenstand der vorliegenden Erfindung ist ein Mittel zur Behandlung von Schimmelpilzen, Bakterien und/oder Algen enthaltend die Komponenten
a) 5 - 20 Gew.% einer Calciumhydroxid-Suspension, wobei die Calciumhydroxid-Partikel einen mittleren Partikeldurchmesser von 1 - 80 µm aufweisen,
b) 60 - 80 Gew.% eines Lösungsmittels,
c) 15 - 25 Gew.% deionisiertes Wasser,
d) 0,05 - 0,6 Gew.% eines Polyacrylats,
e) 0,05 - 0,6 Gew.% einer Aminverbindung,
f) 0,05 - 0,6 Gew.% eines Aminethoxylats,
bezogen auf die Summe der Komponenten a) + b) + c) + d) + e) + f).

Das erfindungsgemäße Mittel zur Behandlung von Schimmelpilzen, Bakterien und/oder Algen weist zahlreiche Vorteile auf.

Die Sedimentation von Calciumhydroxid (Ca(OH)₂) Partikeln im Mittel wird verringert oder vermieden. Mit anderen Worten, die Calciumhydroxid Partikel bleiben über einen längeren Zeitraum über homogen im Mittel verteilt. Das erfindungsgemäße Mittel ist daher für längere Zeit "gebrauchsfertig", ohne dass das Mittel erneut homogenisiert werden muss, beispielsweise durch kräftiges Aufschütteln.

Darüber hinaus lassen sich im Falle einer (teilweisen) Sedimentation die Calciumhydroxid Partikel wieder leicht im Mittel homogen verteilen. Dafür genügt ein leichtes und kurzes Aufschütteln um das Mittel wieder in eine homogene Suspension zu überführen.

Des Weiteren ist das Mittel ist langzeitstabil, wodurch eine Unbrauchbarkeit des Mittels vermieden wird. Das erfindungsgemäße Mittel gewährleistet zudem eine rasche, sichere, vollständige und dauerhafte Entfernung von Schimmelpilzen, Bakterien und/oder Algen von Oberflächen.

Als weiterer Vorteil ist die Ausbildung einer dauerhaften Schutzschicht aus Ca(OH)₂/Calciumcarbonat auf Oberflächen gegen den Befall von Schimmelpilzen, Bakterien und/oder Algen zu nennen. Der nach dem Auftragen und/oder Eindringen des Mittels einsetzende Trocknungsprozesses des Lösungsmittels löst eine Carbonatisierung der Ca(OH)₂ Partikel durch atmosphärisches CO₂ aus. Dadurch werden unter anderem tiefer liegende Schimmelpilze und Sporen im behandelten Material durch das sich bildende Calciumcarbonat gebunden und somit dauerhaft wachstumsunfähig und ungefährlich gemacht.

Der mittlere Partikeldurchmesser der Calciumhydroxid-Partikel wird bevorzugt als Sauterdurchmesser ermittelt, nach DIN ISO 9276-2. Dieser ist wie folgt definiert: würde man das gesamte Volumen der Partikel einer Schüttung in gleich große Kugeln umformen, deren gesamte Oberfläche gleich der gesamten Oberfläche der Partikel ist, dann hätten diese Kugeln den Sauterdurchmesser als Durchmesser.

Vorzugsweise weisen die Calciumhydroxid-Partikel einen mittleren Partikeldurchmesser von mindestens 2 µm, mehr bevorzugt von mindestens 5 µm, mehr bevorzugt von mindestens 10 µm, mehr bevorzugt von mindestens 12,5 µm, weiter mehr bevorzugt von mindestens 15 µm, und am meisten bevorzugt von mindestens 17,5 µm auf. Mit mittleren Partikeldurchmessern von 1 µm, 2 µm oder 5 µm wird insbesonders eine Tiefenwirkung des Mittels erzielt, da die Partikel aufgrund des geringeren Durchmessers in tiefere Schichten der zu behandelnden Oberfläche eindringen kann.

Die Calciumhydroxid-Partikel weisen vorzugsweise einen mittleren Partikeldurchmesser von maximal 80 µm, mehr bevorzugt von maximal 70 µm, weiter mehr bevorzugt von maximal 60 µm, weiter mehr bevorzugt von maximal 50 µm, weiter mehr bevorzugt von maximal 40 µm, und am meisten bevorzugt von maximal 30 µm auf.

Weisen die Calciumhydroxid-Partikel einen mittleren Partikeldurchmesser von mindestens 10 µm, 12,5 µm, 15 µm oder 17,5 µm auf, so wirken die Partikel abrasiv, d.h. die Partikel wirken als eine Art Scheuer- oder Schleifmittel. Je größer der mittlere Partikeldurchmesser der Calciumhydroxid-Partikel ist, desto größer ist der abrasive Effekt. Größere Partikeldurchmesser, beispielsweise von 10 - 80 µm, 12,5 - 80 µm oder 15 - 80 µm, sind daher besonders bei rauen Oberflächen von Vorteil, wie beispielsweise auf befallenen Mauerwerk. Das erfindungsgemäße Mittel weist daher nicht nur eine biozide, sondern zugleich auch eine abrasive Wirkung auf. Dies hat den Vorteil, dass Schimmel, Bakterien und/oder Algen in einem einzigen Arbeitsschritt zugleich abgetötet und von der befallenen Oberfläche, wie beispielsweise Fliesen, Mauern, Fugen oder Holz, entfernt werden. Die Behandlung wird dadurch wesentlich vereinfacht und effizienter gemacht.

Die Konzentration der Calciumhydroxid Partikel in der Suspension beträgt vorzugsweise 15 - 30 Gew.%, mehr bevorzugt 17,5 - 27,5 Gew.%, und am meisten bevorzugt 20 - 25 Gew.%. Das Suspensionsmittel der Calciumhydroxid-Suspension ist vorzugsweise deionisiertes Wasser. Derartige Suspensionen sind auch unter der Bezeichnung Kalkmilch bekannt.

Das erfindungsgemäße Mittel enthält 60 - 80 Gew.% eines Lösungsmittels b), vorzugsweise 62 - 78 Gew.%, mehr bevorzugt 64 - 76 Gew.%, mehr bevorzugt 66 - 74 Gew.%, weiter mehr bevorzugt 68 - 72 Gew.%, und am meisten bevorzugt 69 - 71 Gew.%. Das Lösungsmittel b) enthält vorzugsweise einen Alkohol, ein Keton, einen Ester oder Mischungen davon. Der Alkohol enthält oder besteht vorzugsweise aus Ethanol, 1-Propanol, 2-Propanol (Isopropanol) oder Mischungen davon. Mehr bevorzugt besteht das Lösungsmittel b) aus Ethanol, 1-Propanol, 2-Propanol oder Mischungen davon. Alkohol als Lösungsmittel hat den Vorteil, dass der Alkohol desinfizierend wirkt.

Das erfindungsgemäße Mittel enthält als Komponente c) 15 - 25 Gew.% deionisiertes Wasser, vorzugsweise 16 - 24 Gew.%, mehr bevorzugt 17 - 23 Gew.%, weiter mehr bevorzugt 18 - 24 Gew.%, und am meisten bevorzugt 19 - 21 Gew.%.

Das erfindungsgemäße Mittel enthält 0,05 - 0,6 Gew.% eines Polyacrylats als Komponente d), vorzugsweise 0,07 - 0,5 Gew.%, mehr bevorzugt 0,09 - 0,4 Gew.%, weiter mehr bevorzugt 0,12 - 0,3 Gew.%, und am meisten bevorzugt 0,15 - 0,25 Gew.%. Vorzugsweise enthält oder besteht das Polyacrylat d) aus einem hydrophobisch-modifizierten, vernetzten Polyacrylat Polymer. Das Polyacrylat d) kann beispielsweise das kommerziell erhältliche Carbopol EZ-3 (Fa. Lubrizol) sein. Das Polyacrylat hat eine verdickende Wirkung.

Das erfindungsgemäße Mittel enthält als Komponente e) 0,05 - 0,6 Gew.% einer Aminverbindung, vorzugsweise 0,07 - 0,5 Gew.%, mehr bevorzugt 0,09 - 0,4 Gew.%, weiter mehr bevorzugt 0,12 - 0,3 Gew.%, und am meisten bevorzugt 0,15 - 0,25 Gew.%. Vorzugsweise enthält die Aminverbindung e) eine tertiäre Amingruppe und/oder eine, zwei, drei oder mehrere Hydroxylgruppen. Die Aminverbindung e) ist vorzugsweise Triisopropanolamin. Mehr bevorzugt besteht die Aminverbindung e) aus Triisopropanolamin.

Das erfindungsgemäße Mittel enthält als Komponente f) 0,05 - 0,6 Gew.% eines Aminethoxylats, vorzugsweise 0,07 - 0,5 Gew.%, mehr bevorzugt 0,09 - 0,4 Gew.%, weiter mehr bevorzugt 0,12 - 0,3 Gew.%, und am meisten bevorzugt 0,15 - 0,25 Gew.%. Vorzugsweise ist das Aminethoxylat ein Fettaminethoxylat. Als Aminethoxylat f) kann beispielsweise das kommerziell erhältliche Genamin C150 (CAS Nummer 61791-14-8; Fa. Clariant) oder das kommerziell erhältliche Lutensol FA12K (Fa. BASF) verwendet werden.

Das erfindungsgemäße Mittel enthält vorzugsweise einen oder mehrere Wirkstoffe. Der Massenanteil eines jeden Wirkstoffs beträgt üblicherweise mehr als 0,01 Gew.%, mehr als 0,05 Gew.%, oder mehr als 0,1 Gew.%. Der Massenanteil eines jeden Wirkstoffs beträgt vorzugsweise nicht mehr als 10 Gew.%, vorzugsweise nicht mehr als 5 Gew.%, vorzugsweise nicht mehr als 2,5 Gew.%, und am meisten bevorzugt nicht mehr als 1 Gew.%, bezogen auf die Summe der Komponenten a) + b) + c) + d) + e) + f). Hat beispielsweise die Summe der Komponenten a) + b) + c) + d) + e) + f) des erfindungsgemäßen Mittels eine Masse von 100 g, so entsprechen 5 Gew.% eines Wirkstoffs einer Masse von 5 g dieses Wirkstoffs.

Vorzugsweise enthält der Wirkstoff einen sporoziden, bakteriziden und/oder fungiziden Wirkstoff. Ein sporizider Wirkstoff wird vorteilhafter Weise bei der Behandlung von Sporenbefall zugesetzt. Der Zusatz eines solchen Wirkstoffs bewirkt, dass durch den sporiziden Wirkstoff die Hüllen der Sporen geöffnet werden können, und die biozidwirksamen Stoffe des Mittels die Sporen anschließend effizient und vollständig abtöten können. Der Wirkstoff kann beispielsweise Ozon, Iod oder ein Aldehyd, wie Formaldehyd, sein.

Vorzugsweise enthält oder besteht der Wirkstoff aus kolloidalem Silber, Hydroxycarbonsäure, Carbonsäure, Dicarbonsäure und Mischungen davon. Es ist weiter bevorzugt, dass die Carbonsäure Sorbinsäure ist. Kolloidales Silber hat den Vorteil, dass es Pilze, Pilzsporen, Viren, Bakterien, Streptokokken, Staphylokokken und andere pathogene Organismen abtötet.

Die vorliegende Erfindung betrifft auch ein Verfahren zur Herstellung eines Mittels zur Behandlung von Schimmelpilzen, Bakterien und/oder Algen.

Das Verfahren zur Herstellung eines Mittels zur Behandlung von Schimmelpilzen, Bakterien und/oder Algen umfasst die Schritte:
a) Mischen eines Lösungsmittels mit deionisiertem Wasser,
b) Zugabe eines Polyacrylats,
c) Zugabe einer Calciumhydroxid-Suspension, wobei die Calciumhydroxid-Partikel einen mittleren Partikeldurchmesser von 1 - 80 µm aufweisen, und
d) Zugabe einer Aminverbindung und eines Aminethoxylats.

Vorzugsweise wird das Polyacrylat in Schritt b) unter Scherwirkung der Mischung aus Schritt a) zugeben. Dies kann beispielsweise durch einen entsprechenden Mixer oder Rührapparat bewerkstelligt werden.

Alle oben beschriebenen Ausführungsformen betreffend das Mittel zur Behandlung von Schimmelpilzen, Bakterien und/oder Algen sind bevorzugte Ausführungsformen des Verfahrens zur Herstellung eines Mittels zur Behandlung von Schimmelpilzen, Bakterien und/oder Algen.

Die vorliegende Erfindung bezieht sich ferner auf die Verwendung eines Mittels enthaltend die Komponenten
a) 5 - 20 Gew.% einer Calciumhydroxid-Suspension, wobei die Calciumhydroxid-Partikel einen mittleren Partikeldurchmesser von 1 - 80 µm aufweisen,
b) 60 - 80 Gew.% eines Lösungsmittels,
c) 15 - 25 Gew.% deionisiertes Wasser,
d) 0,05 - 0,6 Gew.% eines Polyacrylats,
e) 0,05 - 0,6 Gew.% einer Aminverbindung,
f) 0,05 - 0,6 Gew.% eines Aminethoxylats,
bezogen auf die Summe der Komponenten a) + b) + c) + d) + e) + f), zur Behandlung von Schimmelpilzen, Bakterien und/oder Algen.

Alle oben beschriebenen Ausführungsformen betreffend das Mittel zur Behandlung von Schimmelpilzen, Bakterien und/oder Algen sind bevorzugte Ausführungsformen der Verwendung des Mittels zur Behandlung von Schimmelpilzen, Bakterien und/oder Algen.

Vorzugsweise wird das Mittel als Zusatz zu einem Oberflächenbehandlungsmittel verwendet. Das Oberflächenbehandlungsmittel kann beispielsweise ein Reinigungsmittel, Lack, Farbe, Holzschutzmittel oder ein Grundierungsmittel sein.

Weitere Einzelheiten, Merkmale und Vorteile des Gegenstands der Erfindung ergeben sich aus der nachfolgenden Beschreibung bevorzugter Ausführungsbeispiele der Erfindung.

### Beispiel 1

Beispiel 1 ist ein Beispiel für ein erfindungsgemäßes Mittel zur Behandlung von Schimmelpilzen, Bakterien und/oder Algen.

Als Calciumhydroxid-Suspension wurde eine 24 Gew.% Suspension von Calciumhydroxid-Partikel in deionisiertem Wasser verwendet, der mittlere Partikeldurchmesser der Calciumhydroxid-Partikel beträgt 5 µm (Fa. Brenntag GmbH).

Zunächst wurde deionisiertes Wasser mit 99% Ethanol, welcher mit 1% MEK (Methylethylketon) vergällt wurde, gemischt. Unter Scheren mittels eines Ultra-Turrax Geräts (Fa. Ika) wurde der Verdicker Carbopol EZ-3 (Fa. Lubrizol) in das Wasser/Ethanol-Gemisch eingestreut und vermischt. Unter langsamen Rühren wurde die 24 Gew.% Calciumhydroxid-Suspension zugesetzt und etwa 5 Minuten gerührt bis eine homogene Mischung erhalten wurde. Zu diesem Gemisch wurde anschließend Triisopropanolamin und Genamin C150 (Fa. Clariant) unter Rühren zugegeben. Die Mischung wurde solange gerührt bis eine homogene Mischung erhalten wurde.

Die Zusammensetzung des erfindungsgemäßen Mittels nach Beispiel 1 ist in der folgenden Tabelle 1 wiedergegeben.

**Tabelle 1**

| **Komponente** | **Gew.%** |
|---|---|
| Deionisiertes Wasser | 19,4 |
| 99% Ethanol (vergällt mit 1% MEK) | 70,0 |
| 24% Ca(OH)₂ Suspension | 10,0 |
| Carbopol EZ-3 | 0,2 |
| Triisopropanolamin | 0,2 |
| Genamin C150 | 0,2 |

Zum Messen der Sedimentation bzw. der Phasentrennung wurde das Mittel in ein Becherglas gegeben und erschütterungsfrei stehen gelassen. Durch Zusatz des Polyacrylats, des Amins und des Aminethoxylats wurde die Sedimentation von Ca(OH)₂ Partikeln signifikant reduziert. Eine signifikante Sedimentation bzw. eine signifikante Phasentrennung hat sich erst nach 24h eingestellt. Durch einfaches und kurzes Aufschütteln konnte das Mittel unmittelbar wieder in eine homogene Suspension überführt werden.

In einem Vergleichsversuch mit einem Mittel, welches die Polyacrylate, Amine und Aminethoxylate nicht enthält, erfolgte die vollständige Sedimentation bzw. Phasentrennung bereits nach 1 h.

### Beispiel 2

In Beispiel 2 wurde eine 24 Gew.% Suspension von Calciumhydroxid-Partikel in deionisiertem Wasser verwendet, wobei der mittlere Partikeldurchmesser der Calciumhydroxid-Partikel 15 µm beträgt. Beispiel 2 wurde im Übrigen analog zu Beispiel 1 hergestellt. Aufgrund des mittleren Partikeldurchmessers von 15 µm wurde neben der bioziden Wirkung gleichzeitig eine abrasive Wirkung erzielt,

Wie in Beispiel 1 kommt es auch hier nach frühestens 24h zu einer vollständigen Sedimentation von Ca(OH)₂ Partikeln in dem Mittel, d.h. einer signifikanten Phasentrennung. Durch einfaches und kurzes Aufschütteln lassen sich die Partikel unmittelbar wieder homogen in dem Mittel verteilen.

### Beispiel 3

Beispiel 3 ist ein Beispiel für ein Mittel zur Behandlung von Schimmelpilzen, Bakterien und/oder Algen mit abrasiver Wirkung, und wurde analog Beispiel 2 hergestellt. Der mittlere Partikeldurchmesser der Calciumhydroxid-Partikel beträgt 15 µm.

Anstelle von Genamin C150 wurde Lutensol FA 12K (Firma BASF) verwendet. Die Zusammensetzung des Mittels ist aus der nachfolgenden Tabelle 2 ersichtlich.

**Tabelle 2**

| **Komponente** | **Gew.%** |
|---|---|
| Deionisiertes Wasser | 19,4 |
| 99% Ethanol (vergällt mit 1% MEK) | 70,0 |
| 24% Ca(OH)₂ Suspension | 10,0 |
| Carbopol EZ-3 | 0,2 |
| Triisopropanolamin | 0,2 |
| Lutensol FA 12K | 0,2 |

Wie in Beispiel 1 kommt es auch hier nach frühestens 24h zu einer vollständigen Sedimentation von Ca(OH)₂ Partikeln in dem Mittel, d.h. einer signifikanten Phasentrennung. Durch einfaches und kurzes Aufschütteln lassen sich die Partikel unmittelbar wieder homogen in dem Mittel verteilen.

## Patentansprüche

1. Mittel zur Behandlung von Schimmelpilzen, Bakterien und/oder Algen, enthaltend die Komponenten
a) 5 - 20 Gew.% einer Calciumhydroxid-Suspension, wobei die Calciumhydroxid-Partikel einen mittleren Partikeldurchmesser von 1 - 80 µm aufweisen,
b) 60 - 80 Gew.% eines Lösungsmittels,
c) 15 - 25 Gew.% deionisiertes Wasser,
d) 0,05 - 0,6 Gew.% eines Polyacrylats,
e) 0,05 - 0,6 Gew.% einer Aminverbindung,
f) 0,05 - 0,6 Gew.% eines Aminethoxylats,
bezogen auf die Summe der Komponenten a) + b) + c) + d) + e) + f).

2. Mittel nach Anspruch 1, **dadurch gekennzeichnet, dass** die Konzentration der Calciumhydroxid Partikel in der Suspension a) 15 - 30 Gew.% beträgt.

3. Mittel nach einem der vorhergehenden Ansprüche, **dadurch gekennzeichnet, dass** die Calciumhydroxid-Partikel einen mittleren Partikeldurchmesser von mindestens 12,5 µm aufweisen.

4. Mittel nach einem der vorhergehenden Ansprüche, **dadurch gekennzeichnet, dass** das Suspensionsmittel der Calciumhydroxid-Suspension deionisiertes Wasser ist.

5. Mittel nach einem der vorhergehenden Ansprüche, **dadurch gekennzeichnet, dass** das Lösungsmittel b) einen Alkohol enthält.

6. Mittel nach Anspruch 5, **dadurch gekennzeichnet, dass** der Alkohol Ethanol, 1-Propanol, 2-Propanol oder Mischungen davon enthält.

7. Mittel nach einem der vorhergehenden Ansprüche, **dadurch gekennzeichnet, dass** die Aminverbindung e) Triisopropanolamin enthält.

8. Mittel nach einem der vorhergehenden Ansprüche, **dadurch gekennzeichnet, dass** das Mittel einen oder mehrere Wirkstoffe enthält.

9. Mittel nach Anspruch 8, **dadurch gekennzeichnet, dass** der Massenanteil eines jeden Wirkstoffs nicht mehr als 10 Gew.%, bezogen auf die Summe der Massen der Komponenten a) + b) + c) + d) + e) + f), beträgt.

10. Mittel nach einem der Ansprüche 8 oder 9, **dadurch gekennzeichnet, dass** der Wirkstoff einen sporoziden, bakteriziden und/oder fungiziden Wirkstoff enthält.

11. Mittel nach einem der Ansprüche 8 bis 10, **dadurch gekennzeichnet, dass** der Wirkstoff kolloidales Silber, Hydroxycarbonsäure, Carbonsäure, Dicarbonsäure und Mischungen davon enthält.

12. Mittel nach Anspruch 11, **dadurch gekennzeichnet, dass** die Carbonsäure Sorbinsäure ist.

13. Verfahren zur Herstellung eines Mittel zur Behandlung von Schimmelpilzen, Bakterien und/oder Algen nach einem der Ansprüche 1 bis 12, umfassend die Schritte:
a) Mischen eines Lösungsmittels mit deionisiertem Wasser,
b) Zugabe eines Polyacrylats,
c) Zugabe einer Calciumhydroxid-Suspension, wobei die Calciumhydroxid-Partikel einen mittleren Partikeldurchmesser von 1 - 80 µm aufweisen, und
d) Zugabe einer Aminverbindung und eines Aminethoxylats.

14. Verfahren nach Anspruch 13, **dadurch gekennzeichnet, dass** das Polyacrylat in Schritt b) unter Scherwirkung der Mischung aus Schritt a) zugeben wird.

15. Verwendung eines Mittels nach einem der Ansprüche 1 bis 12 zur Behandlung von Schimmelpilzen, Bakterien und/oder Algen.
